# EUROPEAN PATENT SPECIFICATION

(11) **EP 2 612 186 B1**
(45) Date of publication and mention of the grant of the patent: **26.09.2018**
(21) Application number: 11754556.6
(22) Date of filing: 23.08.2011
(51) Int. Cl.: G02B 6/38

(54) **FERRULE ASSEMBLY PROCESS**
MONTAGEVERFAHREN FÜR EINE HÜLSE
PROCÉDÉ D'ASSEMBLAGE DANS FERRULE

(30) Priority: 31.08.2010 US 872315
(43) Date of publication of application: 10.07.2013
(73) Proprietor: TE Connectivity Corporation, Berwyn, PA 19312 (US); TE Connectivity Nederland B.V., 5222 AR 's Hertogenbosch (NL)
(72) Inventor: VAN GEFFEN, Sjoerd, NL-5464 PA Veghel (NL); HULTERMANS, Antonius, P.C.M., NL-5032 CL Tilburg (NL); KADAR-KALLEN, Michael, Aaron, Harrisburg, PA 17111 (US); BUIJS, Marcellus, P.J., NL-6716 ET Ede (NL); SCHNEIDER, Paul, NL-5291 AH Gemonde (NL)
(74) Representative: Johnstone, Douglas Ian
(86) International application number: PCT/US2011/001473
(87) International publication number: WO 2012/030377

(56) References cited:
- JP-A- 2006 113 149
- US-A1- 2001 036 341
- US-A1- 2006 245 695
- US-A1- 2010 129 031
- US-B1- 6 196 732
- US-B1- 7 194 179

## Description

The present invention relates generally to a process of manufacturing a ferrule assembly, more specifically, to controlling to fiber protrusion of a ferrule assembly.

Optical fiber connectors are an essential part of substantially all optical fiber communication systems. For instance, optical connectors are used to join segments of fiber into longer lengths, to connect fiber to active devices such as radiation sources, detectors and repeaters, and to connect fiber to passive devices such as switches and attenuators. The principal function of an optical fiber connector is to hold a fiber end such that the core of the fiber is axially aligned with the optical path of the component to which the connector is mated (e.g., another fiber, a planar waveguide, or an opto-electric device). This way, light from the fiber is optically coupled to the other component.

It is well known that to effect optical coupling and minimize Fresnel loss, "physical contact" may be made between the fiber end face and the optical path of the mating device. To effect physical contact, traditionally optical connectors have employed a "ferrule," which is a well-known component for holding one or more fibers such that the fiber end faces are presented for optical coupling. Ferrule connectors typically bias the ferrule forward such that, when the connector is mated to a mating component, the ferrule urges against the mating component to physically contact the fiber end face with the optical path of the mating component.

To effect such physical contact, a conventional ferrule typically requires polishing. A polished ferrule may best be described by way of contrast to an unpolished ferrule. An unpolished ferrule has a geometry and anomalies on its end face which make it difficult, if not impossible, to bring the end face of fiber housed therein into physical contact with the optical path of the mating component. In addition, when multiple fibers are affixed to an unpolished ferrule, the position of the fiber end faces tend to vary along the mating axis, thereby making it difficult to effect optical coupling with all of the fibers. Polishing the end face of the ferrule with the fibers held therein, shapes and smoothes the ferrule end face while simultaneously polishing the fiber end faces and making them coplanar. To minimize variances in the shape of the ferrule and the coplanarity of the fiber end faces, polishing typically is performed to exacting standards. Polishing therefore tends to be costly and prone to reworking and waste, thereby lowering yields. The problems associated with polishing the ferrule are exasperated in multi-fiber ferrules which are more complicated to polish.

This issue was addressed in U.S. Patent No. 7,377,700, which discloses an approach for producing a ferrule assembly using an unpolished assembly. Briefly, the approach involves (a) positioning at least one fiber in a ferrule such that a portion of the fiber extends beyond the end face of the ferrule; (b) affixing the fiber relative to the ferrule; and (c) cleaving the portion of the fiber. Such an approach is beneficial because it separates the functions of preparing the fiber's end face for optical coupling and positioning the fiber within the ferrule. By treating these functions separately, the fiber end face can be prepared independently of the ferrule, thereby eliminating the need to polish the ferrule/fiber assembly, while facilitating the precise positioning of the fiber end face relative to the ferrule. This patent recognizes also that it is generally preferred to have the fiber end face protrude from the ferrule to enhance its ability to make physical contact.

Although this approach offers significant advantages, applicants recognize that coplanarity among the fibers tends to become problematic as the number of fibers in the ferrule increases. That is, cleaving fibers and positioning them in the ferrule such that all the fiber end faces are essentially in the same plane is very difficult when the fibers are not polished *in situ* in the ferrule. This difficulty increases necessarily as the number of fibers increases. The issue of coplanarity is addressed in United States Patent Publication No. 2009/0271126.

United States Patent Publication No. 2001/0036341 discloses a ferrule having an end face and an optical fiber press member having a ferrule connecting face. A recess is formed in the end face between a pair of guide pin insertion holes, and a positioning protrusive portion is formed on the ferrule connecting face between a pair of guide pins extending from the ferrule connecting face. The optical fiber press member is positioned so that the guide pins are inserted into their respective guide pin insertion holes and the press member is moved towards the ferrule until the ferrule connecting face abuts the ferrule end face wherein the positioning protrusive portion is fitted into the recess. A plurality of optical fibers is cleaved and each cleaved optical fiber has a tip face. The fibers are then positioned in the ferrule such that a portion of each fiber extends beyond a bottom of the recess with the tip faces abutting against the positioning protrusive portion. The fibers are then fixed relative to the ferrule with adhesive.

Therefore, there is a need for a process of producing a ferrule assembly in which precise fiber protrusion is achieved among the fibers without polishing. The present invention fulfills this need among others.

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to the more detailed description that is presented later.

According to the invention there is provided a process for preparing terminated fibers comprising: (a) positioning one or more fibers in a ferrule having a ferrule end face and at least one first alignment member such that a portion of each fiber extends forward beyond said ferrule end face; (b) after step (a), cleaving said portion of each fiber, thereby forming cleaved fiber end faces; (c) after step (b), interengaging a second alignment member of a tool with said first alignment member such that a register surface of said tool is aligned with said ferrule, and registering said cleaved fiber end faces against said register surface, wherein one of said first or second alignment members is an alignment pin and the other is an alignment hole for receiving said alignment pin, and said tool has only one alignment member; and (d) after step (c), affixing said fibers relative to said ferrule.

The present invention provides a ferrule in which precise fiber protrusion is achieved without polishing. By the invention using a tool that has a register surface and an alignment member that cooperates with one or more alignment members of a ferrule to align the register surface of the tool with the ferrule end face, a register surface is provided against which each fiber can abut to ensure its proper protrusion. Proper fiber protrusion facilitates physical contact among the fibers as described above. It should be understood, however, that the invention is not limited to physical contact applications and may be practiced whenever precise positioning of the fiber end face is required (such as, for example, when optically coupling a fiber across a gap (air or gel-filled) to a lens, active opto electrical device, passive device, or a waveguide). Thus, the invention exploits alignment members that are commonly found in standard ferrules to establish fiber protrusion.

The invention will now be described by way of example with reference to the accompanying drawings wherein:
Figs. 1(a)-1(d) show schematically various stages of preparing a multifiber ferrule assembly according to one embodiment of the present invention.
Fig. 2 shows schematically a fiber-alignment tool used in the process depicted Figs 1(a)-1(d).
Fig. 3 shows schematically an embodiment of a fiber-alignment tool similar to the one shown in Fig. 1, but with two alignment members, and which does not fall within the scope of the invention.
Figs. 4(a)-(d) show schematically different fiber profiles and their corresponding register surface on embodiments of the fiber-alignment tool which do not fall within the scope of the invention.
Figs. 5(a)-(g) show schematically different register surfaces on embodiments of the fiber-alignment tool for three dimensional fiber arrays and which do not fall within the scope of the invention.

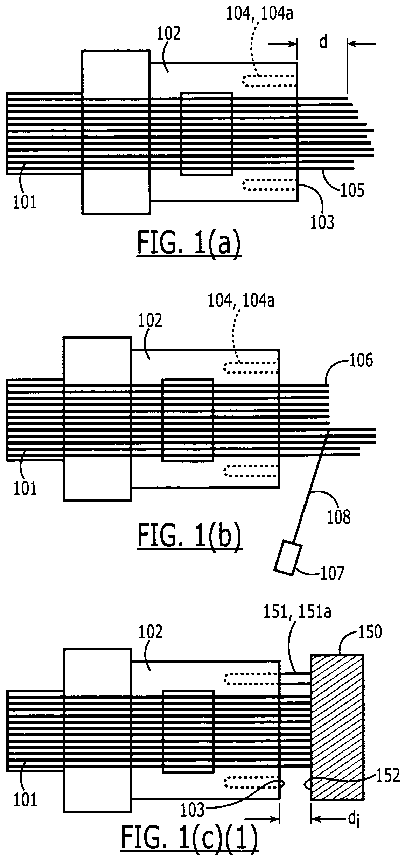

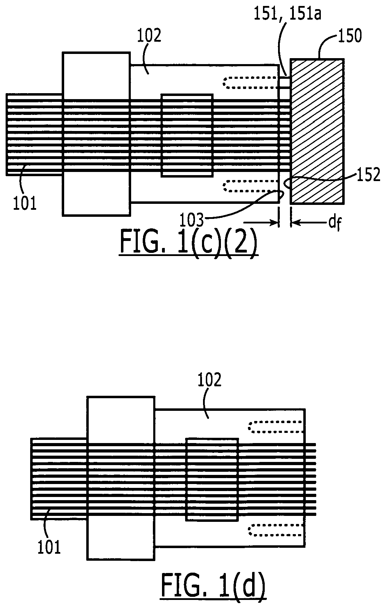

Referring to Figs 1(a)-(d), a process for preparing terminated fibers according to one embodiment of the present invention is shown. (Although this description considers a multifiber ferrule in detail, it should be understood that the invention may be practiced on single fiber ferrules as well.) As shown schematically in Fig. 1(a), multiple fibers 101 are positioned in a ferrule 102 having a ferrule end face 103 and at least one first alignment member 104 such that a portion 105 of each of the fibers 101 extends beyond the ferrule end face 103. The portion of the fibers 101 extending from the ferrule end face 103 is then cleaved to form cleaved fiber ends 106 as shown in Fig. 1(b). Next, as shown in Fig. 1(c), a second alignment member 151 of a tool 150 is interengaged with the first alignment member 104 such that a register surface 152 of the tool 150 is aligned with the ferrule 102. The cleaved fiber end faces 106 are then registered against the register surface 152, thereby establishing a desired fiber protrusion profile. In Fig. 1(d), the fibers are affixed to the ferrule 102. Each of these steps is considered in greater detail below.

The step depicted in Fig. 1(a) involves providing ferrule 102, which has an end face 103, and at least one first alignment member 104. Although the end face 103 is depicted as a planar surface in Fig. 1(a), it should be understood that a ferrule end face is not necessarily planar and may be instead, for example, curved or domed, or it may have different facets or steps. In one embodiment, the ferrule has one or more pathways (not shown), each pathway being adapted to receive one of the fibers 101. The pathways may be, for example, bore holes or V-grooves. It should be understood, however, that the invention may be practiced with any ferrule having an alignment member, including ferrules that do not have individual pathways for each fiber. For example, the ferrule 102 may be configured to hold ribbon cable or a bundle of fibers collectively.

The first alignment member 104 may be incorporated into the ferrule 102 specifically for interengagement with the second alignment member 151 or it may be inherent in the ferrule design. More specifically, the alignment member may be used to align the ferrule 102 not only with the tool 150, but also with a mating structure (not shown). Such alignment members are well known, and include, for example, alignment pin/alignment hole for receiving the pin, a sleeve, and V-grooves along the sides of the ferrule. In the embodiment shown in Fig. 1(a), the first alignment member 104 is an alignment hole 104a for receiving an alignment pin 151a. Such alignment holes are well known, and are used, for example, in standard Mold-Transfer (MT) style ferrules, such as those used in the MT-RJ and Lightray MPX® ferrules.

As mentioned above, a conventional ferrule end face is typically polished, which involves abrading the ferrule end face to remove all anomalies therefrom and to smooth the fiber end faces sufficiently for optical coupling. However, the ferrule of the present invention does not require such polishing since the fiber end faces are suitable for optical coupling following the cleaving step (depicted in Fig. 1(b)). Therefore, in one embodiment, the ferrule is unpolished.

As used herein, the term "unpolished ferrule" refers to a ferrule that has not been polished or is not polished to the extent typically required to achieve physical contact. An unpolished ferrule in this context has a number of distinguishing characteristics. First, it has a molded surface rather than a polished or machined surface. A molded surface is characterized typically (although not necessarily) by a rough surface, which may not be precisely oriented with respect to the guiding features of the ferrule. Such a surface also tends not to be reflective. The surface of the ferrule may also contain the impression of features that support the core pins used to mold the ferrule, and may include a parting line where two sides of the mold meet. Second, an unpolished ferrule comprises embedded particles (e.g. glass particles used for imparting hardness) that lack a planar surface. That is, during polishing, the embedded particles at the end face of the ferrule will have planar surface ground into them at the surface of the end face as the end face is abraded away. Obviously, in an unpolished ferrule, the embedded particles at the end face will not have such a ground planar surface. Third, an unpolished ferrule typically (although not necessarily) has surface anomalies on its end face that tend to interfere with the mating surface of the mating connector or device and prevent end faces of fibers from making physical contact with mating optical pathways. For example, ridges or bumps on the end face of an unpolished ferrule prevent the end face from making good physical contact with a perfectly planar surface. Obviously, as the end face of the ferrule becomes larger in area, as with MT ferrules, the probability of surface variations and imperfections increases along with the number of fibers. Polishing the ferrule removes these surface anomalies. Therefore, as used herein, the term "unpolished ferrule" refers to a ferrule having an end face that has a molded finish and not a polished finish, and/or an end face that has embedded particles which do not have a planar surface.

Although the ferrule may be made from any known material, generally MT ferrules are made of polymeric material, such as highly glass-filled polyphenylene sulfide (PPS). Single-fiber ferrules are typically made of a ceramic such as zirconia or metal such as stainless steel or nickel-silver or titanium.

As shown in Fig. 1(a), the fibers 101 are disposed in the ferrule 102 such that a portion 105 of the fiber extends beyond the ferrule end face 103. Each fiber is positioned such that a sufficient portion extends beyond the ferrule end face to facilitate cleaving thereof. The extent to which a fiber extends from the ferrule will depend upon the cleaving techniques used. For example, a mechanical type cleaving method typically requires more space than a laser cleaving approach and, thus, the fiber needs to extend further beyond the ferrule end face to accommodate the mechanism. One skilled in the art will readily understand to what extent the fibers should be extended past the end face of the ferrule to facilitate cleaving thereof.

As depicted in Fig. 1(b), after the fibers 101 are disposed in the ferrule 102, their protruding portions are cleaved to form cleaved fiber end faces 106. A cleaved fiber end face is suitable for optical coupling-i.e. it is substantially planar and generally free of optical defects such as scratches or chips.

Cleaving the fibers may be performed either mechanically or by laser cleaving. With respect to mechanical cleaving, this is a well-known technique and involves essentially shearing the fibers cleanly to provide an end face. It may be preferred to polish a mechanically cleaved end face of the fiber. Methods of performing this polishing are well-known and may include, for example, physical grinding/polishing and "laser polishing" in which a laser is used to melt and thereby smooth the end face of the fiber. Although mechanical cleaving is certainly contemplated in the present invention, the preferred method of cleaving is laser cleaving, which is the embodiment shown in Fig. 1(b).

With respect to laser cleaving, suitable processes are described, for example, in U.S. Pat. Nos. 6,246,026; 6,963,687; and 7,377,700. In the laser cleaving process, optical fiber material is typically ablated rather than melted. This requires a laser 107 to produce a beam 108 having sufficient energy to effect the fiber's immediate sublimation. Suitable results have been achieved using a laser with a wavelength between 0.1 and 1.5 µm and 8.5 µm to 10.6 µm. Suitable lasers include, for example, CO₂ and excimer lasers, although a CO₂ laser is generally, although not necessarily, preferred. CO₂ lasers have proven particularly advantageous due to the high speed at which they can be operated and resulting cost effectiveness.

Balancing the objective of delivering high energy to fiber to ablate the glass is the need to minimize the energy absorbed by the glass surrounding the cut so as to minimize melting adjacent the cut. For this reason, the laser is preferably operated in a pulse mode for cutting the fiber. In the pulse mode, the laser transmits short high-energy pulses of laser light so that the material of the fiber is sublimated. The pulses are very short and have very steep edges, thus, the maximum pulse energy is achieved very rapidly. For example, suitable results have been achieved in which the peak power of the pulse is between about 0.1 and about 1000 watts and the pulse length is greater than about 50 fs. Good results are achieved with a CO₂ laser (wavelength 10.6 µm) having a pulse length of 35 µs and a peak power of 600 watts.

Although operating the laser in pulse mode is preferred generally, particularly with high power lasers such as a CO₂ laser, some application may favor operating the laser in a continuous wave mode. For example, if the contact time between the laser and fiber is decreased, i.e., the laser cuts across the fiber more quickly, it may be desirable to operate the laser in continuous wave mode.

Directing the laser beam on the fiber to effect the cut is subject to several variables involving the angle of the beam to the fiber, the axial position of the beam along the fiber, the angle of convergence of the beam, the cutting time/energy level of the beam, and the desired end face geometry. These variables are considered in detail in US Patent No. 7,377,700.

The way in which the fibers and laser beam are moved relative to each other to effect the cuts described above can vary and it is anticipated that any approach which is precise, accurate and repeatable will suffice. In one embodiment, a device is used which maintains a certain angle between the beam and the fiber and moves the fibers at one or more predetermined angles relative to the laser beam. It is within the scope of the present invention, however, to move the laser beam relative to the fiber. Alternatively, a stationary elliptical beam can be used to cut stationary fibers as is done in the commercially-available system sold by OpTek Systems Inc., Greenville, SC.

As shown in Fig. 1(c), after the fibers are cleaved, the fiber end faces are registered against the register surface 152 of tool 150. This may be accomplished in various ways, including, for example, by pushing the fibers into the register surface 152 or by pushing the register surface 152 into the fibers. In the embodiment shown in Fig. 1(c), the fiber end faces are registered against the register surface 152 by virtue of moving the register surface backward, toward the ferrule end face 103. Specifically, in position (1), the register surface 152 is a distance dᵢ away from the ferrule end face 103. As the register surface 152 is pushed backward to position (2), it aligns the cleaved fiber end faces 106 in the same plane and adjusts the degree of fiber protrusion to the desired distance d_{f} before the fibers 101 are secured in place. It should be clear that the degree to which the register surface 152 is pushed back depends on the desired degree of fiber protrusion. Because a certain amount of fiber protrusion from the ferrule end face is generally, although not necessarily, desirable, the distance d_{f} is generally, although not necessarily, greater than 0. For example, suitable results have been achieved with a certain distance d_{f} of about 1 to about 3.5 µm.

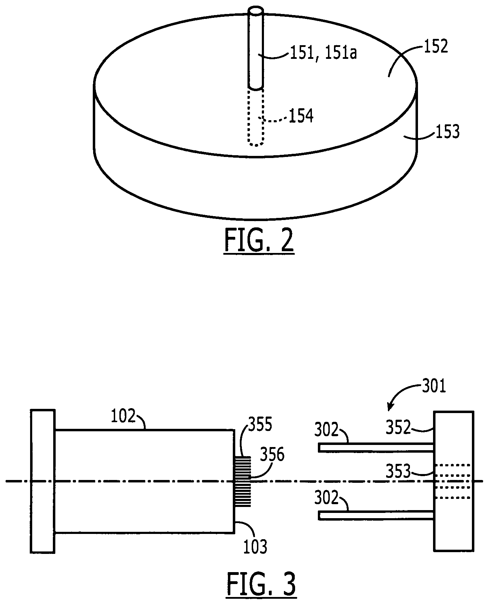

Referring to Fig. 2, the tool 150 is discussed in greater detail. The tool 150 comprises a body portion 153 which defines the register surface 152. The register surface may be flat/planar or non-planar. A non-planar register surface includes, for example, stepped and curved surfaces, and combination thereof. A stepped surface is a surface having edges or steps, and may resemble, for example, a stepped U-shape or stepped V-shape. Conversely, a curved surface is one having a smoothly varying line or surface. Examples of curves include an arc (or more precisely a circular arc), a non-circular arc (or a non-radiused curve), a Gaussian curve, or a parabolic curve. It should also be understood that the profiles discussed herein may apply not only along the rows (x-axis), but also across the rows (y-axis) in the case of a multi-row ferrule. For example, in a three dimension context, curved surfaces include a spherical surface, Gaussian surface, or parabolic surface, just to name a few. Additionally, the curved surfaces may comprise any combination of curves or compound curves. In yet another embodiment, the fiber profile may be described by an even polynomial function of x and y, in which the profile will be symmetric about the center of the ferrule. If the angular tolerances are not symmetric or in the case of a ferrule which has an end face which is not perpendicular to the guide pin axis by design (e.g., an 8 degree end face on a single mode ferrule), it may be advantageous to have a non-symmetric end face profile. This may lead to a desired fiber profile that is expressed as a polynomial with both even and odd terms (with the fiber profile being measured with respect to the angled end face). In another embodiment, the register surface may be configured to profile the fiber end faces such that their coplanarity is greater than 100nm, with the greatest variation occurring between the inner fibers and the outer fibers.

The geometry of the register surface depends on the application. For example, in the embodiment shown in Fig. 2, the register surface is flat. Such a configuration will align the fiber end faces along a common plane, thus establishing good coplanarity of the fiber ends. Alternatively, it may be desirable in some applications to use a non-planar register surface to impart a profile to the fibers' protrusion from the ferrule end face. For example, some applications may favor having the outer fibers of the ferrule protrude farther than those on the inside. Such a configuration may improve the physical contact of the fibers toward the periphery of the ferrule as physical contact with these fibers has traditionally more difficult to maintain because the typical polishing process tends to yield fiber protrusions which are shorter for the outer fibers. Accordingly, in one embodiment, the registered surface is a convex surface. The alignment feature is spaced relative to the convex surface such that the apex of the convex surface is positioned in the center of the ferrule end face when the tool is interengaged with the ferrule. In yet another embodiment, it may be desirable to have the fibers protrude to mate with a mating structure having a non-planar surface. For example, in one embodiment, the fibers may optically couple with a lens which images light onto the end faces of an array of fibers that are arranged along a non-planar surface. In such an embodiment, the register surface will be profiled to match the non-planar surface of the mating structure.

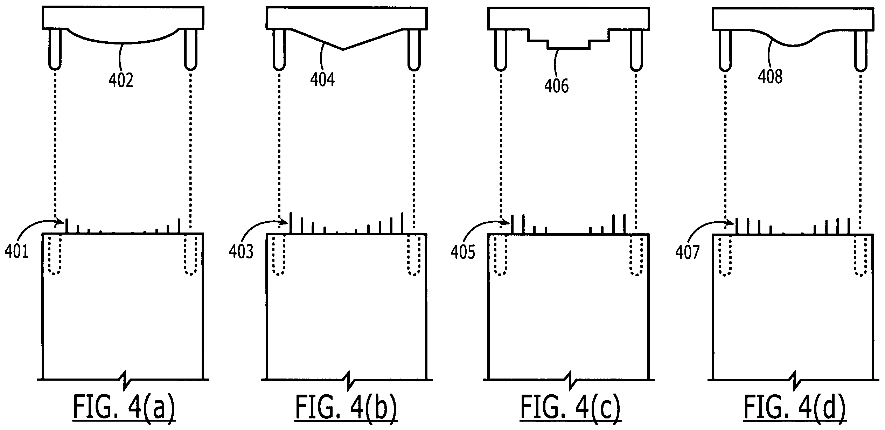

Referring to Figs 4(a)-(d), examples of different fiber protrusion profiles and the corresponding non-planar register surface on embodiments of the tool (which do not fall within the scope of the invention) for producing them are shown. (It should be appreciated that the fiber protrusion in these drawings is not to scale, but rather is greatly exaggerated to illustrate the embodiments.) In Fig. 4(a), a curved fiber protrusion profile 401 is shown along with the corresponding curved register surface 402. The curve defined in this profile is a radiused curve, although, as mentioned above, the curve may be any curve shaped including non-radiused curves (see Fig. 4(d)) or compound curves. In Fig. 4(b), a V-shape fiber protrusion profile 403 is shown along with the corresponding V-shaped register surface 404. In Fig. 4(c), a stepped fiber protrusion profile 405 is shown along with the corresponding stepped register surface 406. In Fig. 4(d), another curved fiber protrusion is shown, in this case, a Gaussian (or inverted bell curve) fiber protrusion profile 407, along with the corresponding Gaussian register surface 408. Still other fiber protrusion profiles and corresponding register surfaces will be apparent to one of skill in light of this disclosure.

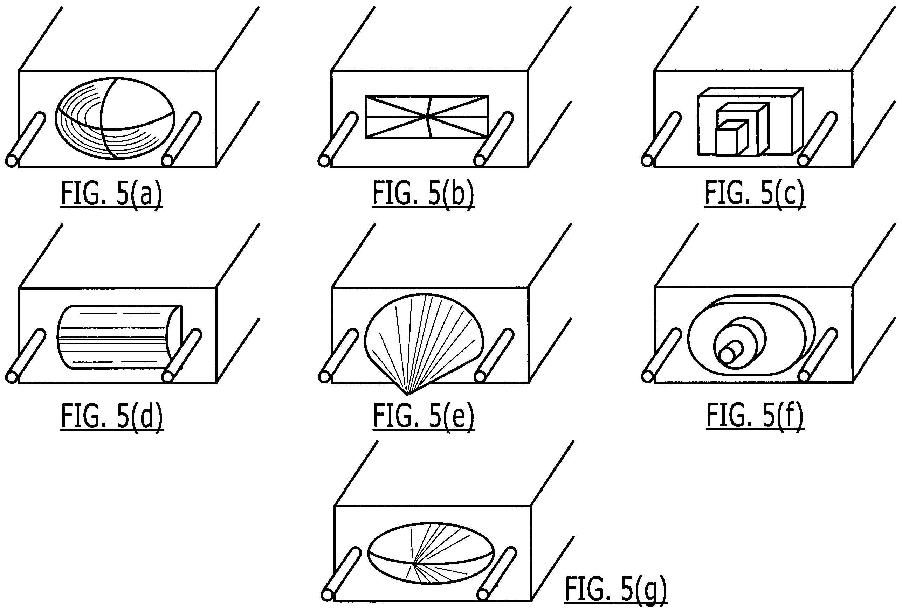

It should be appreciated that the profiles described above with respect to a single row of fibers can be combined, mixed and matched to form a variety of different three dimensional fiber profiles in embodiments having three or more rows of fibers. In other words, each profile along a row (x-axis) can be applied across rows (y-axis) as well. For example, referring to Figs 5(a)-(g) various register surfaces are disclosed for producing different three-dimensional fiber profiles. Fig. 5(a) is an ellipsoid surface formed by applying the curved profile of Fig. 4(a) in the x and y axes. Fig. 5(b) is an intersecting-ridge surface formed by applying the V-shape profile of Fig. 4(b) in the x and y axes. Fig. 5(c) is a square stepped pyramid surface formed by applying the stepped profile of Fig. 4(c) in the x and y axes. Fig. 5(d) is a cylindrical surface formed by applying the profile of Fig. 4(a) just along the y axis. Fig. 5(e) is an elongated cone shaped surface formed by rotating the profile of Fig. 4(b) around the z axis (perpendicular to the x and y axes) and then elongating it along the x axis. Fig. 5(f) is an elongated set of stepped concentric columns or more commonly, an elongated wedding cake surface, formed by rotating the profile of Fig. 4(c) around the z axis and then elongating it along the x axis. Fig. 5(g) is a rounded ridge or football shaped surface formed by applying the profile of Fig. 4(a) along the x-axis and the profile of Fig. 4(b) along the y axis. The examples above are intended to be illustrative, and other surface will be obvious to those of skill in the art in light of this disclosure.

To ensure the register surface is oriented properly with respect to the ferrule, the tool 150 comprises at least one second alignment member 151 at a certain angle from the register surface 152. The second alignment member is configured to cooperate with the first alignment member of the ferrule. As mentioned above, the alignment members may be any known alignment means. In the embodiment shown in Fig. 2, the second alignment member 151 is an alignment pin 151a adapted to be received in the alignment hole 104a of the ferrule 102. It should be understood, that, rather than the alignment pin being disposed in the tool 150, it is within the scope of the invention that the configuration of the first and second alignment members be reversed such that the alignment pin is disposed in the ferrule, while the alignment hole is defined in the tool. As is known in the art, cooperating components having alignment pin/hole configurations are typically made by first defining alignment holes in both components and then deposing an alignment pins in the alignment hole of one of the components.

Because the tool 150 comprises a register surface 152 for urging against the cleaved fiber end faces and pushing them backward in the ferrule, it should comprise a material having suitable toughness and abrasion resistance. Suitable materials include for example, stainless steel, tool steel, Stavax®, and sapphire. Furthermore, the surface may be treated or coated to improve durability.

In the embodiment shown in Fig. 2, the first and second alignment members interengage to establish a precise relationship between the register surface and the fibers in the ferrule. This relationship may vary according to the application. For example, in the one embodiment, the first alignment member may be perpendicular to the ferrule end face and parallel to the fibers, as in the case of an MT ferrule. Likewise, the second alignment member may be perpendicular to the register surface such that, when the first and second alignment members interengage, the register surface is aligned to be parallel with the ferrule end face and perpendicular to the fibers. Alternatively, the first and/or second alignment members may be angled with respect to the ferrule end face/register surface respectively, such that the register surface is angled with respect to the ferrule end face when the first and second alignment members are interengaged.

The tool 150 shown in Fig. 2 has only one alignment member 151. Such an embodiment has certain benefits. For example, when using such a fixture, the ferrule may be positioned against the register surface in many different positions. This allows the ferrule to be positioned anywhere in a circle around the single alignment pin, thereby extending the life of the tool. Additionally, having just one alignment member allows the pin/pin hole to be machined with a lathe during the same operation/step as when the register surface is machined (discussed below).

Alternatively, referring to Fig. 3, an embodiment of the tool 301 which does not fall within the scope of the invention may have two second alignment members 302. Using a pair of alignment members offers certain benefits. First, it locks the tool 301 into a certain orientation with respect to the ferrule end face 103. In other words, the ferrule is not able to pivot on a single alignment member as it might with the tool of Fig. 2. Maintaining an orientation between the tool and the ferrule may be important, especially if the register surface 352 is not flat but has a profile, in this case a convex curve. (It should be noted that the profile or curve in this case, may be so slight that it is not perceptible to the naked eye.) In this embodiment, it is important that the apex 353 of the convex curve is positioned proximate the center fibers 356 of the array such that the protrusion of the center fibers 356 is shorter than the protrusion of the outer fibers 355 toward the perimeter of the ferrule 102. Having a pair of alignment features ensures this positioning when the tool is interengaged with the ferrule. Additionally, the additional alignment feature tends to increase the accuracy of the alignment of the register surface to the fibers. Because many standard ferrules already have two alignment holes, increasing the number of alignment points used by the tool will not negatively affect the cost the ferrules.

The tool 150 can be manufactured by molding or machining. In one embodiment, the register surface is produced on a lathe. Prior to the tool being removed from the chuck of the lathe, the alignment hole 154 for receiving the pin may be formed. Such a procedure ensures that the alignment hole (and hence the alignment pin) is perpendicular to the register surface 152.

In one embodiment, the tool 150 is also configured to control the degree to which the register surface 152 is pushed back toward the ferrule end face. For example, it may be advantageous to fashion the register surface 152 with stops (not shown) that project toward the ferrule end face such that they contact the ferrule end face when the register surface is the desired distance from the fiber end face. Alternatively, a washer or similar device may be placed around the alignment pin 151a to act as a spacer to position the register surface 152 the desired distance from the ferrule end face. Still other stops and spacers for positioning the register surface precisely relative to the ferrule end face will be obvious to those of skill in the art in light of this disclosure.

As shown in Fig. 1(d), once the fibers are pushed back to the desired point d_{f}, they are affixed such that their relative position with respect to the ferrule is held. Methods of affixing the fibers are well-known and include, for example, applying adhesive in the ferrule pathways. Other techniques for fixing the fibers position may include, for example, clamping the fiber in an object which is in fixed relation to the ferrule (see, for example, U.S. Pat. No. 6,200,040 which discloses such a clamping mechanism, i.e., the splice element). In one embodiment, a light-curable adhesive is injected in the window 110 before the fibers are pushed back. Then, after they are pushed back into the desired position d_{f}, the adhesive is cured using a certain wavelength (e.g., UV light). This procedure has the advantage of wetting a substantial length of the fibers by virtue of the fibers moving during the alignment step of Fig. 1(c).

The ferrule assembly is uniquely suited to facilitate fiber protrusion since the fiber end face and ferrule end face are not polished simultaneously as in the prior art. Polishing a ferrule and fiber assembly together necessarily requires differential wearing of the ferrule and fiber to obtain fiber protrusion. Such differential wearing, however, can be difficult to control, and moreover it does not facilitate varying the protrusion of the fibers across the ferrule. The approach of the present invention, on the other hand, prepares the fiber end face independent from the ferrule end face (in fact, preferably, the ferrule is not even polished). Thus, the fiber end face position and shape with respect to the ferrule end face is fully configurable. For example, in one embodiment, the fibers may optically couple with a lens which images light onto the end faces of an array of fibers that are arranged along a non-planar surface.

Once the ferrule assembly is prepared it may be assembled into an optical package. As used herein, the term "optical package" refers broadly to an assembly comprising a fiber-terminated ferrule assembly and may include, for example, a ferrule-containing connector (e.g., multi-fiber connectors such as the Lightray MPX® connector, MT-RJ connector, and MPO connector, or a ferrule-containing device (e.g., passive devices, such as, add/drop filters, arrayed wave guide gratings (AWGs), splitters/couplers, and attenuators, and active devices, such as, optical amplifiers, transmitters, receivers and transceivers). As is well known, the ferrule assembly in the optical package holds a fiber's end such that the core of the fiber is axially aligned with the optical path of the mating component to which the connector or device is mated. This way, light from the fiber is optically coupled to the other component. The term "optical pathway" as used herein refers to any medium for conducting optical signals, and includes, for example, a fiber or waveguide, a silica or polymeric structure in a substrate, or a silica or polymeric optical component. The term "mating component" refers to an optical package that contains or comprises the optical pathway, and may include, for example, optical connectors and optical devices as mentioned above. A mating component typically comprises a mating surface which is adapted to receive the end face of the ferrule to optically couple the fiber(s) with the mating optical pathway(s). Such mating surfaces are well known in the art.

Optical packages comprising the ferrule assembly have a number of advantages over traditional ferrule-containing packages. First, as mentioned above, the ferrule assembly of the present invention obviates the need for polishing. This results in significant simplification of the assembly process and a significant reduction in costs. Aside from this advantage, however, the package of the present invention also has performance related advantages over traditional connectors and packages. Perhaps the most significant performance advantage is derived from the configurability of the fibers' protrusion from the ferrule end face. The protrusion not only allows for the use of an unpolished ferrule, but also facilitates mating with an unpolished ferrule. Thus, the ferrule assembly does away with the need for polished ferrules entirely, thereby reducing costs among various optical packages. Furthermore, the fiber's protrusion can even be exploited to compensate for undercut of a polished or unpolished ferrule.

## Claims

1. A process for preparing terminated fibers comprising:
(a) positioning one or more fibers (101) in a ferrule (102) having a ferrule end face (103) and at least one first alignment member (104) such that a portion of each fiber extends forward beyond said ferrule end face (103);
(b) after step (a), cleaving said portion of each fiber, thereby forming cleaved fiber end faces (106);
(c) after step (b), interengaging a second alignment member (151) of a tool (150) with said first alignment member (104) such that a register surface (152) of said tool is aligned with said ferrule (102), and registering said cleaved fiber end faces (106) against said register surface (152), wherein one of said first or second alignment members is an alignment pin and the other is an alignment hole for receiving said alignment pin, and said tool (150) has only one alignment member (151); and
(d) after step (c), affixing said fibers (101) relative to said ferrule (102).

2. The process of claim 1, wherein registering said cleaved fiber end faces comprises moving said register surface (152) backward, thereby pushing said fibers (101) backward until all said cleaved fiber end faces (106) abut said register surface and until said register surface (152) is a certain distance form said ferrule end face (103).

3. The process of claim 2, wherein said certain distance is about 1 µm to about 3.5 µm.

4. The process of claim 2, wherein said certain distance is essentially zero distance thus resulting in no protrusion of said fibers.

5. The process of claim 1, wherein said cleaving is laser cleaving.

6. The process of claim 1, wherein said first alignment member (104) is an alignment hole and said second alignment member (151) is an alignment pin.

7. The process of claim 1, wherein said register surface (152) is planar.

8. The process of claim 1, wherein said ferrule (102) is an MT-type ferrule

9. The process of claim 1, wherein said ferrule is a multifiber ferrule.

10. The process of claim 1, wherein, in step (c), two second alignment members interengage with two first alignment members.

11. The process of claim 1, wherein said register surface (152) is non-planar and is at least one of curved, V-shaped, stepped, ellipsoid, intersecting ridges, square stepped pyramid, cylindrical, conical, elongated stepped concentric columns, and curved ridge.

12. The process of claim 1, wherein said ferrule end face is not polished.

13. The process of claim 1, wherein in step (d), prior to step (b) said fibers are pushed through said ferrule such that they extend beyond said ferrule end face, adhesive is applied over said fibers, and then said fibers are withdrawn while leaving said portion of each fiber extending beyond said ferrule end face.

## Patentansprüche

1. Verfahren zur Herstellung von terminierten Fasern, das Folgendes beinhaltet:
(a) Positionieren von einer oder mehreren Fasern (101) in einer Aderendhülse (102) mit einer Aderendhülsenendfläche (103) und wenigstens einem ersten Ausrichtungselement (104), so dass ein Abschnitt jeder Faser nach vorne über die genannte Aderendhülsenendfläche (103) hinaus verläuft;
(b) Spalten, nach Schritt (a), des genannten Abschnitts jeder Faser, um dadurch gespaltene Faserendflächen (106) zu bilden;
(c) Ineingriffbringen, nach Schritt (b), eines zweiten Ausrichtungselements (151) eines Werkzeugs (150) mit dem genannten ersten Ausrichtungselement (104), so dass eine Anlagefläche (152) des genannten Werkzeugs mit der genannten Aderendhülse (102) ausgerichtet wird, und Anlegen der genannten gespaltenen Faserendflächen (106) an die genannte Anlagefläche (152), wobei das genannte erste oder das genannte zweite Ausrichtungselement ein Ausrichtungsstift ist und das andere ein Ausrichtungsloch zum Aufnehmen des genannten Ausrichtungsstifts ist, und das genannte Werkzeug (150) nur ein Ausrichtungselement (151) hat; und
(d) Fixieren, nach Schritt (c), der genannten Fasern (101) relativ zu der genannten Aderendhülse (102).

2. Verfahren nach Anspruch 1, wobei das Anlegen der genannten gespaltenen Faserendflächen das Rückwärtsbewegen der genannten Anlagefläche (152) beinhaltet, um dadurch die genannten Fasern (101) nach hinten zu schieben, bis alle genannten gespaltenen Faserendflächen (106) an der genannten Anlagefläche anliegen und bis die genannte Anlagefläche (152) einen bestimmten Abstand von der genannten Aderendhülsenendfläche (103) hat.

3. Verfahren nach Anspruch 2, wobei der genannte bestimmte Abstand etwa 1 µm bis etwa 3,5 µm beträgt.

4. Verfahren nach Anspruch 2, wobei der genannte bestimmte Abstand im Wesentlichen ein Nullabstand ist, so dass es zu keinem Vorsprung der genannten Fasern kommt.

5. Verfahren nach Anspruch 1, wobei das genannte Spalten Laserspalten ist.

6. Verfahren nach Anspruch 1, wobei das genannte erste Ausrichtungselement (104) ein Ausrichtungsloch ist und das genannte zweite Ausrichtungselement (151) ein Ausrichtungsstift ist.

7. Verfahren nach Anspruch 1, wobei die genannte Anlagefläche (152) planar ist.

8. Verfahren nach Anspruch 1, wobei die genannte Aderendhülse (102) eine Aderendhülse des MT-Typs ist.

9. Verfahren nach Anspruch 1, wobei die genannte Aderendhülse eine Multifaser-Aderendhülse ist.

10. Verfahren nach Anspruch 1, wobei in Schritt (c) zwei zweite Ausrichtungselemente mit zwei ersten Ausrichtungselementen ineinandergreifen.

11. Verfahren nach Anspruch 1, wobei die genannte Anlagefläche (152) nichtplanar und wenigstens eines der Folgenden ist: gekrümmt, V-förmig, abgestuft, ellipsoid, sich schneidende Grate, eine quadratische abgestufte Pyramide, zylindrisch, konisch, länglich abgestufte konzentrische Säulen und ein gekrümmter Grat.

12. Verfahren nach Anspruch 1, wobei die genannte Aderendhülsenendfläche nicht poliert ist.

13. Verfahren nach Anspruch 1, wobei in Schritt (d), vor Schritt (b), die genannten Fasern so durch die genannte Aderendhülse geschoben werden, dass sie über die genannte Aderendhülsenendfläche hinaus verlaufen, Klebstoff über die genannten Fasern aufgebracht wird und die genannten Fasern dann zurückgezogen werden, während der genannte Abschnitt jeder Faser über die genannte Aderendhülsenendfläche hinaus verläuft.

## Revendications

1. Procédé de préparation de fibres terminées comprenant:
(a) le positionnement d'une ou de plusieurs fibres (101) dans une ferrule (102) présentant une face d'extrémité de ferrule (103) et au moins un premier élément d'alignement (104) de telle sorte qu'une partie de chaque fibre s'étende vers l'avant au-delà de ladite face d'extrémité de ferrule (103) ;
(b) après l'étape (a), le clivage de ladite partie de chaque fibre, formant ainsi des faces d'extrémité de fibres clivées (106) ;
(c) après l'étape (b), la mise en prise réciproque d'un second élément d'alignement (151) d'un outil (150) avec ledit premier élément d'alignement (104) de telle sorte qu'une surface d'alignement (152) dudit outil soit alignée avec ladite ferrule (102), et l'alignement desdites faces d'extrémité de fibres clivées (106) contre ladite surface d'alignement (152), dans lequel l'un desdits premier ou second éléments d'alignement est une broche d'alignement et l'autre est un trou d'alignement destiné à recevoir ladite broche d'alignement, et ledit outil (150) ne comporte qu'un seul élément d'alignement (151) ; et
(d) après l'étape (c), la fixation desdites fibres (101) par rapport à ladite ferrule (102).

2. Procédé selon la revendication 1, dans lequel l'alignement desdites faces d'extrémité de fibres clivées comprend le déplacement vers l'arrière de ladite surface d'alignement (152), repoussant ainsi lesdites fibres (101) jusqu'à ce que toutes lesdites faces d'extrémité de fibres clivées (106) buttent contre ladite surface d'alignement et jusqu'à ce que ladite surface d'alignement (152) se trouve à une certaine distance de ladite face d'extrémité de ferrule (103).

3. Procédé selon la revendication 2, dans lequel ladite certaine distance est environ 1 µm à environ 3.5 µm.

4. Procédé selon la revendication 2, dans lequel ladite certaine distance est essentiellement une distance nulle qui n'entraîne alors aucun dépassement desdites fibres.

5. Procédé selon la revendication 1, dans lequel ledit clivage est un clivage au laser.

6. Procédé selon la revendication 1, dans lequel ledit premier élément d'alignement (104) est un trou d'alignement et ledit second élément d'alignement (151) est une broche d'alignement.

7. Procédé selon la revendication 1, dans lequel ladite surface d'alignement (152) est plane.

8. Procédé selon la revendication 1, dans lequel ladite ferrule (102) est une ferrule de type MT.

9. Procédé selon la revendication 1, dans lequel ladite ferrule est une ferrule multifibres.

10. Procédé selon la revendication 1, dans lequel, à l'étape (c), deux éléments d'alignement se mettent réciproquement en prise avec deux premiers éléments d'alignement.

11. Procédé selon la revendication 1, dans lequel ladite surface d'alignement (152) est non planaire et est au moins l'une d'une forme courbe, en V, en gradins, ellipsoïde, à arêtes d'intersection, en pyramide carrée à gradins, cylindrique, conique, à colonnes allongées concentriques à gradins et en arête courbe.

12. Procédé selon la revendication 1, dans lequel ladite face d'extrémité de ferrule n'est pas polie.

13. Procédé selon la revendication 1, dans lequel à l'étape (d), avant l'étape (b) lesdites fibres sont poussées à travers ladite ferrule de manière à s'étendre au-delà de ladite face d'extrémité de ferrule, un adhésif est appliqué sur lesdites fibres, puis lesdites fibres sont tirées tout en laissant ladite partie de chaque fibre s'étendant au-delà de ladite face d'extrémité de ferrule.
